# EUROPÄISCHE PATENTSCHRIFT

(11) **EP 4 041 537 B1**
(45) Veröffentlichungstag und Bekanntmachung des Hinweises auf die Patenterteilung: **12.07.2023**
(21) Anmeldenummer: 20771801.6
(22) Anmeldetag: 09.09.2020
(51) Int. Cl.: B29C 70/52

(54) **PULTRUSIONSVORRICHTUNG FÜR GEKRÜMMTE PROFILE**
PULTRUSION APPARATUS FOR CURVED PROFILES
APPAREIL DE PULTRUSION POUR PROFILES COURBES

(30) Priorität: 08.10.2019 DE 102019127025
(43) Veröffentlichungstag der Anmeldung: 17.08.2022
(73) Patentinhaber: KraussMaffei Technologies GmbH, 80997 München (DE)
(72) Erfinder: SCHMIDHUBER, Sebastian, 80805 München (DE)
(74) Vertreter: Wilhelm, Ludwig
(86) Internationale Anmeldenummer: PCT/EP2020/075189
(87) Internationale Veröffentlichungsnummer: WO 2021/069170

(56) Entgegenhaltungen:
- WO-A1-2018/177803
- DE-A1-102009 053 967
- DE-A1-102015 206 917

## Beschreibung

Die Erfindung betrifft Pultrusionsvorrichtungen, die zum Herstellen von faserverstärkten Profilen mit veränderlichen Querschnitten oder von gekrümmten faserverstärkten Profilen geeignet sind.

Bei der Pultrusion werden üblicherweise faserverstärkte Profile als Voll- oder Hohlprofile mit konstantem Querschnitt und ohne Krümmung hergestellt. Hierbei wird ein mit einer Pultrusionsmatrix getränktes Faserbündel durch eine Hohlkontur gezogen und dabei ausgehärtet. Die Form der Hohlkontur bestimmt dabei die äußere Form des Profils. Die Apparatur besteht dabei aus feststehenden Komponenten, durch die das Faserbündel bewegt wird. Daraus resultiert die Linearität, d.h. Krümmungsfreiheit, der Profile und ihr konstanter Querschnitt.

Neben dieser Technik ist es auch möglich, in sich gekrümmte Profile herzustellen, indem die Kontur zur Formung des Profils beweglich ausgestaltet wird. Dabei wird das getränkte Faserbündel in einem sich bewegendem Werkzeug ausgehärtet, das Werkzeug selbst verformt das getränkte Faserbündel durch die eigene Geometrie bzw. durch die Geometrie, auf der es verfahren wird. Durch Segmentierung der Kontur mittels verstellbarer Einzelkomponenten kann eine Vielzahl von gekrümmten, faserverstärkten Profilen hergestellt werden.

Allerdings muss zur Verstellung der Form des Profils, insbesondere des Querschnitts die gesamte Anlage abgeschaltet und ein Umbau vorgenommen werden. Es ist nicht möglich, eine Veränderung des Querschnitts eines Profils während des laufenden Pultrusionsprozesses vorzunehmen.

DE102009053967A1 betrifft ein Strangziehwerkzeug zum Endformen von vorausgerichteten, mit einem Imprägnierwerkstoff imprägnierten Fasern unter Aushärten des Imprägnierwerkstoffs, mit einer eine Außenkontur eines strangzuziehenden Profils definierenden Außenform, wobei mindestens zwei sich gegenüberliegende Seitenwände der Außenform derart verstellbar sind, dass ein in zumindest einer Ebene unterschiedlich und/oder partiell gekrümmtes Profil durch Strangziehen herstellbar ist.

Es ist damit Aufgabe der vorliegenden Erfindung eine Pultrusionsvorrichtung anzugeben, mit der ohne Unterbrechungen des Prozessablaufs faserverstärkte Profile hergestellt werden können, die veränderliche Querschnitte aufweisen oder gekrümmt sein können.

Diese Aufgabe wird mit dem Gegenstand des unabhängigen Anspruchs gelöst. Vorteilhafte Weiterbildungen sind in den abhängigen Ansprüchen angegeben.

Zum Beispiel kann eine Pultrusionsvorrichtung zur Herstellung von faserverstärkten Profilen eine Faserzuführung zum Zuführen eines Faserbündels, ein Tränkwerkzeug zum Tränken des von der Faserzuführung zugeführten Faserbündels in einer Pultrusionsmatrix und ein Formgebungswerkzeug zum Formen und Aushärten des mit der Pultrusionsmatrix getränkten Faserbündels aufweisen, um ein faserverstärktes Profil herzustellen. Hierbei ist das Formgebungswerkzeug geeignet, das mit der Pultrusionsmatrix getränkte Faserbündel in dem Formgebungswerkzeug durch eine Mehrzahl von Öffnungen zu bewegen, deren Innenkonturen die Außenkontur des faserverstärkten Profils definieren und die jeweils in Bewegungsrichtung des Faserbündels feststehen. Das Formgebungswerkzeug ist zudem geeignet, während eines Betriebs der Pultrusionsvorrichtung Querschnitte der Öffnungen senkrecht zur Bewegungsrichtung derart zu verändern, dass die Querschnittsflächen der Öffnungen konstant bleiben.

Es wird also eine Pultrusionsvorrichtung bereitgestellt, bei der die Form des herzustellenden Profils durch mehrere verschiedene Öffnungen bestimmt wird, durch die ein mit Pultrusionsmatrix, typischer Weise einem Harz oder dergleichen, getränktes Faserbündel (Glasfasern, Kohlenstoff-, Aramidfasern oder dergleichen) geführt wird. Die Tränkung mit Pultrusionsmatrix erfolgt hier in einem Tränkwerkzeug, etwa einem Tränkbad oder einer Injektionsbox. Die Tränkung kann vor der Formgebung aber auch direkt bei der Formgebung geschehen. Dann sind Tränkwerkzeug und Formgebungswerkzeug nur funktionell unterscheidbar, aber räumlich nicht getrennt.

Die Anordnung der Öffnungen und deren Querschnitte bestimmen den Verlauf des Faserbündels durch das Formgebungswerkzeug. Liegen sämtliche Öffnungen auf einer Linie und haben den gleichen Querschnitt, ist es möglich, in der herkömmlichen Weise lineare Profile herzustellen.

Der Begriff "Öffnung" soll hierbei derart verstanden werden, dass sämtliche Konturen davon umfasst sein sollen, die dazu geeignet sind, das Faserbündel in sich aufzunehmen, zu formen und in dem Formgebungswerkzeug zu führen. Verschiedene Öffnungen sind dadurch unterschieden, dass sich ihr Querschnitt unabhängig voneinander verändern lässt. Unter einer Änderung des Querschnitts soll hier nicht nur die Änderung der Innenkontur der Öffnung verstanden werden, sondern auch eine Verschiebung der Öffnung senkrecht zur Bewegungsrichtung ohne eine Änderung der Innenkontur. Eine Änderung des Querschnitts im Sinne der Erfindung liegt also vor, wenn sich die Querschnitte der gleichen Öffnung zu verschiedenen Zeiten nicht decken.

Die Öffnungen stehen im Formgebungswerkzeug fest, d.h. sie bewegen sich mit Bezug auf das Faserbündel nicht entlang der Bewegungsrichtung. Die Pultrusion erfolgt also nur dadurch, dass das mit Harz getränkte Faserbündel durch das Formgebungswerkzeug hindurch gezogen wird. Ein Anhalten des Faserbündels und eine Bewegung des Formgebungswerkzeuges mit Bezug auf das Faserbündel kommen nicht vor, bzw. sind nicht wesentlich für die Pultrusion der faserverstärkten Profile.

Einzig senkrecht zur Bewegungsrichtung des Faserbündels durch das Formgebungswerkzeug sind die Öffnungen verstellbar. Diese Verstellung erfolgt derart, dass die Querschnittsfläche konstant bleibt, die Abmessungen aber verändert werden können. Dadurch wird sichergestellt, dass der Anteil der Fasern im Gesamtvolumen des mit Pultrusionsmatrix getränkten Faserbündels konstant bleibt. Anders ausgedrückt wird durch die konstanten Öffnungsquerschnitte sichergestellt, dass die Menge von Pultrusionsmatrix pro Faser gleich bleibt.

Die Form der verschiedenen Öffnungen, d.h. die Kontur, die sie dem Profil geben, kann hierbei unterschiedlich sein, solange die Flächen der Öffnungsquerschnitte gleich sind. Dies kann z.B. dazu verwendet werden, um während des laufenden Betriebs von einer Kontur auf eine andere Kontur umzustellen. Hierzu haben z.B. alle Öffnungen anfangs die gleichen Querschnitte, um eine erste Kontur zu erzeugen. Beginnend mit der Öffnung, die der Faserzuführung zunächst liegt, wird der Querschnitt auf eine zweite Kontur umgestellt. Das Faserbündel wechselt also innerhalb des Formgebungswerkzeugs seine Kontur. Die Stelle des Konturwechsels wandert aufgrund der Bewegung des Faserbündels durch das Formgebungswerkzeug. Um die zweite Kontur beizubehalten, werden der Reihe nach die Querschnitte sämtlicher Öffnungen entsprechend dieser zweiten Kontur verändert. Dies erlaubt es also, verschiedene Profilquerschnitte zu erreichen, ohne die Pultrusion stoppen zu müssen. Dies erhöht naturgemäß die Produktionsrate aufgrund einer reduzierten Ausfallzeit.

In ähnlicher Weise ist es auch möglich, gekrümmte Profile auf kontinuierliche Weise herzustellen. Das Formgebungswerkzeug ist hierzu geeignet, die Querschnitte der Öffnungen derart zu verändern, dass die Innenkonturen der Öffnungen eine für die Außenkontur des faserverstärkten Profils gewünschte Krümmung definieren. Die Querschnitte der Öffnungen können dann derart verändert werden, dass die Krümmung beim Bewegen des Faserbündels durch die Öffnungen erhalten bleibt.

Die Öffnungen können also zum Beispiel alle die gleiche Querschnittsform aufweisen, sind aber nicht auf einer Linie angeordnet, sondern definieren eine Krümmung. Zum Beispiel können Mittelpunkte der Öffnungen auf einem Kreisbogen oder einer Sinuslinie liegen. Wird das Faserbündel im nächsten Moment weiterbewegt, werden die Öffnungen senkrecht zur Bewegungsrichtung derart verschoben, dass die anfängliche Krümmungsform erhalten bleibt. Betrachtet man die Kombination der Öffnungen als ein einziges "Krümmungsbild", so verschiebt sich dieses Krümmungsbild also mit der gleichen Geschwindigkeit durch das Formgebungswerkzeug, mit der auch das Faserbündel durch das Formgebungswerkzeug bewegt wird. Einzelne Teilbereiche des Faserbündels sind stets von der gleichen durch (verschiedene) Öffnungen gebildeten Kontur umgeben.

Hierdurch ist es möglich, das Faserbündel mit einer bestimmten Krümmung auszuhärten, die mit dem Faserbündel mitwandert. Die der Faserzuführung zunächst liegenden Öffnungen schreiben bei fortschreitendem Transport des Faserbündels durch das Formgebungswerkzeug die Krümmung des Profils fort. Auf diese Weise können gekrümmte Profile kontinuierlich pultrudiert werden, d.h. bei konstanter Bewegungsgeschwindigkeit des Faserbündels. Zudem kann die Krümmung des pultrudierten Profils geändert werden, ohne den Pultrusionsprozess zu verändern, indem die Öffnungen derart verfahren werden, dass anstatt eines ersten Krümmungsbildes (z.B. eines Kreisbogensegments) ein zweites Krümmungsbild (z.B. eine Segment einer Sinuskurve) durch die Öffnungen gebildet wird und durch das Formgebungswerkzeug wandert. Es ist also möglich, in einfacher Weise und ohne Anhalten der Pultrusionsanlage verschiedene Krümmungen für faserverstärkte Profile einzustellen.

Das Formgebungswerkzeug weist Abdichtungen auf, die innerhalb der Öffnungen angeordnet sind und einen durch sämtliche Öffnungen führenden Kanal für das mit der Pultrusionsmatrix getränkte Faserbündel bilden. Dadurch wird neben den Öffnungen eine weitere Struktur zur Stützung des Faserbündels gegeben, durch das die Außenkontur des Faserbündels glatter gestaltet werden kann. Zudem verhindern derartige Abdichtungen, die sämtliche Öffnungen verbinden, dass Pultrusionsmatrix verloren geht, wodurch die Ablaufsicherheit des Prozesses sichergestellt und die Maschine vor Verunreinigungen geschützt wird.

Die Abdichtungen sind als eine Membran aus einem Werkstoff, vorzugsweise einem Metall, ausgebildet, die mit einem Überlapp senkrecht zur Bewegungsrichtung in sich gedreht ist. Es wird also nur eine einzige Abdichtung verwendet, die sämtliche Öffnungen miteinander verbindet. Diese kann z.B. aus einem dünnen Metallblech oder einer Metallfolie bestehen, das in der Form einen Rohres oder eines Schlauchs durch die Öffnungen geführt ist, aber dabei derart flexibel ist, dass Änderungen der Querschnitte der Öffnungen den Innendurchmesser des Rohres verändern können. Vorzugsweise ist diese metallene Membran aus einem Bogen Metall geformt, der in sich gedreht ist, d.h. der zu einer Rolle eingeschlagen ist. Dies erlaubt dem durch die Membran gebildeten Kanal, seine Innenkontur leicht zu verändern, indem der Bereich der Überlappung vergrößert oder verkleinert werden kann. Auf diese Weise kann eine sichere und leicht herzustellende Abdichtung erzielt werden.

Das Formgebungswerkzeug kann für jede Öffnung eine Kombination von verstellbaren Schiebern aufweisen, deren Positionen den Querschnitt der jeweiligen Öffnung definieren. Jede Öffnung wird also durch den Zwischenraum zwischen den Enden der ihr zugeordneten Schieber definiert. Wird die Stellung der Schieber verändert, ändert sich der Querschnitt der Öffnung. Diese Verstellung der Schieber erfolgt dabei derart, dass sich die Querschnittsfläche der Öffnung nicht verändert. Fahren also einzelne Schieber nach innen, fahren gleichzeitig andere Schieber nach außen, um eine konstante Querschnittsfläche zu garantieren. Natürlich ist es auch möglich, den Querschnitt derart zu ändern, dass sich die Querschnittsfläche ändert, wenn z.B. ein verändertes Verhältnis von Faseranteil und Pultrusionsmatrixanteil angestrebt wird. Dies erlaubt eine einfache und flexible Steuerung der Form und/oder der Größe der Öffnungen.

Jede Öffnung kann von zwei Paaren von Schiebern definiert werden, von denen das eine Paar von Schiebern geeignet ist, in einer ersten Richtung verstellt zu werden, die senkrecht zur Bewegungsrichtung ist, während das andere Paar von Schiebern geeignet ist, in einer zweiten Richtung verstellt zu werden, die senkrecht zur ersten Richtung und zur Bewegungsrichtung ist. Die Öffnungen werden also durch senkrecht aufeinander stehende Schieber definiert. Diese sind in der Lage jede rechteckige Außenkontur für das pultrudierte Profil zu definieren. Ist eine gerundete Form gewünscht kann dies z.B. durch das Einbringen einer Membran erreicht werden, wie sie oben beschrieben wurde. Die Enden der einzelnen Schieber können aber auch mit Membranen verbunden sein, die eine Abdichtung des Zwischenraums zwischen den Enden der Schieber herstellen. Auch diese Membranen können aus Metall oder aus jedem anderen ausreichend festen und flexiblen Stoff gefertigt sein. Die Kombination von senkrecht aufeinander stehenden Schiebern ist eine leicht zu konstruierende Variante, um Öffnungen zu schaffen, deren Form und/oder Größe frei gesteuert werden können.

Das Formgebungswerkzeug kann Mittel zum hydraulischen oder pneumatischen Betätigen der Schieber aufweisen oder die Schieber können mechanisch über eine Kulisse verfahren werden. Dies ermöglicht eine rasche und stufenlose Veränderung der Querschnitte der einzelnen Öffnungen.

Die Schieber benachbarter Öffnungen können aneinander angrenzen. Dann definieren die Öffnungen bereits einen durchgängigen Kanal durch das Pultrusionswerkzeug. Dies kann das Vorsehen von Abdichtmitteln unnötig machen und erlaubt zudem eine maximal flexible Einstellbarkeit der Öffnungen.

Die Schieber benachbarter Öffnungen können aber auch voneinander beabstandet sein. Dies verringert die technische Komplexität des Aufbaus. Je nach Tränkungsgrad des Faserbündels kann eine zusätzliche Führung mittels der oben beschriebenen Abdichtungen bzw. Membranen notwendig sein.

Die Pultrusionsvorrichtung nach einem der vorherigen Ansprüche kann des Weiteren einen Kern aufweisen, der sich vom Tränkwerkzeug aus durch Öffnungen des Formgebungswerkzeugs erstreckt, um einen Hohlraum im faserverstärkten Profil zu erzeugen. Dadurch können Hohlprofile, wie etwa Rohre oder dergleichen hergestellt werden. Die Öffnungen sind hierbei derart angeordnet, dass der Kern, bzw. seine Aufhängung durch die Öffnungen geführt werden kann. Es ist also auch die Herstellung von gekrümmten Hohlprofilen bzw. von Hohlprofilen mit sich änderndem Querschnitt möglich.

Zumindest ein Teil der Schieber und/oder der Kern können Kanäle aufweisen, die geeignet sind, ein Heizmedium zu führen. Dadurch werden die Schieber bzw. der Kern beheizbar, was das Aushärten der Pultrusionsmatrix befördern kann. Hierdurch kann die Prozessgeschwindigkeit und damit der Ausstoß der Pultrusionsvorrichtung erhöht werden. Die Schieber und/oder der Kern können hierbei mittels additiver Fertigung hergestellt werden, etwa durch 3D-Druck. Dies erlaubt es, auch Leitungsgeometrien für das Heizmedium zu verwenden, die mit herkömmlichen Fertigungsverfahren nicht erzeugt werden können. Dies kann zu einer verbesserten Ausheizung des Faserbündels und damit zu einer weiteren Beschleunigung des Herstellungsprozesses führen.

Die vorliegende Erfindung soll im Folgenden mit Bezug auf die Figuren näher beschrieben werden. Es versteht sich von selbst, dass diese Beschreibung rein beispielhaft ist, während die Erfindung allein durch die Ansprüche definiert ist. Es zeigt:
- **Fig. 1A und 1B**: schematische Ansichten von Pultrusionsvorrichtungen;
- **Fig. 2**: eine schematische Ansicht eines Querschnitts durch eine der Pultrusionsvorrichtungen der Fig. 1A und 1B; und
- **Fig. 3A und 3B**: Detailansichten der schematischen Ansichten der Pultrusionsvorrichtungen der Fig. 1A und 1B.

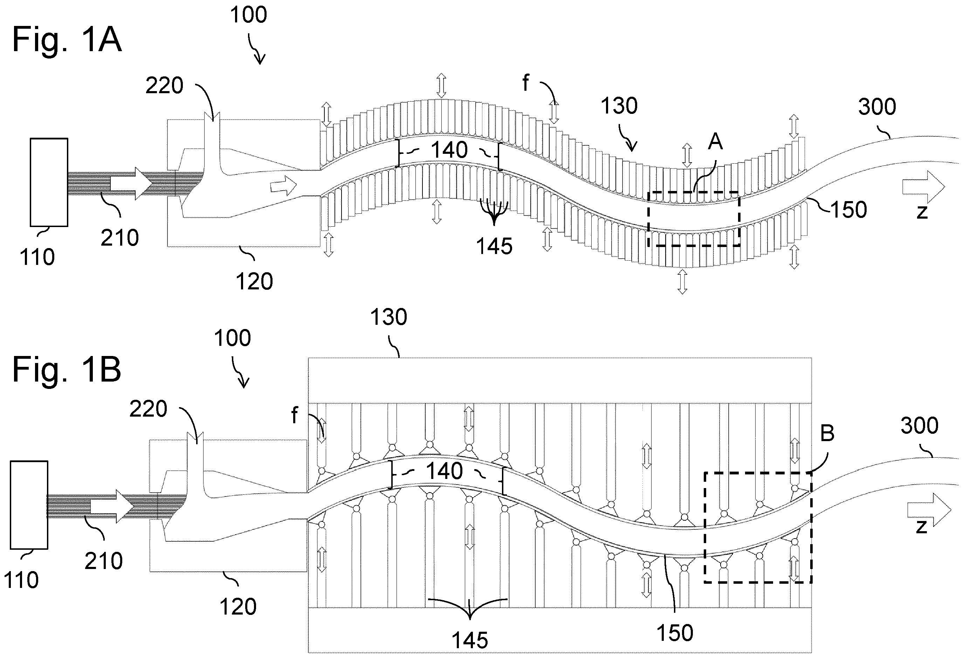

Die Fig. 1A zeigt schematisch einen Schnitt durch eine Pultrusionsvorrichtung 100 entlang einer Bewegungsrichtung z eines in der Pultrusionsvorrichtung 100 geförderten Faserbündels 210. Die Pultrusionsvorrichtung 100 weist eine Faserzuführung 110, ein Tränkwerkzeug 120 und ein Formgebungswerkzeug 130 auf.

Das Faserbündel 210 wird der Faserzuführung 110 entnommen und von dort in das Tränkwergzeug 120 geführt. Bei der Faserzuführung 110 kann es sich z.B. um eine Mehrzahl von Faserspulen handeln, die die Fasern des Faserbündels liefern. Es kann sich um Einzelfasern oder auch um Fasergewebe oder dergleichen handeln. Das Faserbündel 210 und die Faserzuführung 110 entsprechen hierbei den aus dem Stand der Technik bekannten Komponenten. Es erübrigt sich also, hierauf weiter einzugehen.

Im Tränkwerkzeug 120 wird das Faserbündel 210 mit einer Pultrusionsmatrix 220, etwa einem Harz, getränkt. Auch dieser Schritt entspricht dem üblichen aus dem Stand der Technik bekannten Vorgehen. Sowohl Tränkwerkzeug 120 als auch Pultrusionsmatrix 220 können wie aus dem Stand der Technik bekannt ausgebildet sein.

Ausgehend vom Tränkwerkzeug 120 wird das mit der Pultrusionsmatrix 220 getränkte Faserbündel 210 durch das Formgebungswerkzeug 130 bewegt. Das Formgebungswerkzeug 130 bewegt sich hierbei nicht, sondern ist wie auch die Faserzuführung 110 und das Tränkwerkzeug 120 statisch. Alternativ kann die Tränkung des Faserbündels 210 mit Pultrusionsmatrix 220 auch innerhalb des Formgebungswerkzeugs 130 stattfinden, Tränkung und Formgebung finden dann also gleichzeitig statt. Die Unterscheidung von Tränkwerkzeug 120 und Formgebungswerkzeug 130 ist dann rein funktional und nicht räumlich, wie in der Fig. 1A dargestellt.

Das Formgebungswerkzeug 130 weist eine Mehrzahl von Öffnungen 140 auf, deren Position, Größe und/oder Form durch zur Bewegungsrichtung z senkrechte Bewegungen der sie umrandenden Elemente geändert werden können, wie durch die Pfeile f angedeutet wird.

Das getränkte Faserbündel 210 wandert hierbei durch sämtliche Öffnungen 140 und erhält dadurch seine Außenkontur. Sind die Öffnungen 140 nicht linear hintereinander angeordnet, so zwingen die Öffnungen 140 dem Faserbündel 210 innerhalb des Formgebungswerkzeugs 130 eine gekrümmte Form auf, wie in der Fig. 1A gezeigt.

Wandert nun das Faserbündel 210 entlang der Bewegungsrichtung z weiter, so wird diese gekrümmte Form zerstört, wenn sich der Querschnitt der einzelnen Öffnungen 140 während der Bewegung des Faserbündels 210 nicht senkrecht zur Bewegungsrichtung z verschieben würde. Die Veränderung der Querschnitte der Öffnungen 140 bzw. die Verschiebung der Öffnungen 140 senkrecht zur Bewegungsrichtung z geschieht deshalb so, dass die Form der Krümmung, d.h. das Krümmungsbild erhalten bleibt. Das heißt, die Positionen der Öffnungen werden bei entsprechendem Vorrücken des Faserbündels derart weitergegeben, dass die Position einer Öffnung 140 anschließend von der entlang der Bewegungsrichtung benachbarten Öffnung 140 eingenommen wird.

Das Faserbündel 210 wird also in gekrümmter Form durch das Formgebungswerkzeug 130 geführt. Dabei härtet die Pultrusionsmatrix 220 aus, so dass am Ende der Pultrusionsvorrichtung 100 ein faserverstärktes Profil 300 mit gekrümmter Außenkontur entnommen werden kann. Auf diese Weise können gebogene Profile 300 hergestellt werden, ohne dass die Förderung des Faserbündels 210 durch das Formgebungswerkzeug 130 angehalten werden muss und ohne das Formgebungswerkzeug 130 zu bewegen.

Anstelle des gezeigten gekrümmten Verlaufs lassen sich mit der Pultrusionsvorrichtung 100 auch lineare Profile 300 herstellen, wenn sämtliche Öffnungen 140 entlang einer Linie angeordnet sind.

Sowohl für gekrümmte, wie auch für lineare Profile 300 ist es zudem möglich, den Querschnitt des Profils 300 während des laufenden Betriebs anzupassen, d.h. ohne die Förderung des Faserbündels 210 durch das Formgebungswerkzeug 130 zu unterbrechen. In diesem Fall wird mit der der Faserzuführung 110 zunächst liegenden Öffnung 140 ein neuer Querschnitt definiert. Diese Stufe im Querschnitt wird dann ähnlich wie die in der Fig. 1A gezeigt Krümmung durch entsprechende Veränderung der Form des Querschnitts der folgenden Öffnungen 140 durch das Formgebungswerkzeug 130 transportiert, bis alle Öffnung 140 einen dem neuen Querschnitt des Profils 300 entsprechenden Querschnitt aufweisen. Hierdurch wird eine Anpassung des Querschnitts des Profils 300 zu jeder Zeit in einfacher Weise ermöglicht.

Um faserverstärkte Profile 300 mit gleichbleibenden mechanischen Eigenschaften herstellen zu können, ist es vorteilhaft, während des Betriebs der Pultrusionsvorrichtung 100 nur solche Änderungen der Form der Öffnungen 140 zuzulassen, bei denen die Querschnittsfläche jeder einzelnen Öffnung 140 gleich bleibt, während sich die Form des Querschnitts ändern kann. So ist z.B. der Übergang von einer rechteckigen zu einer quadratischen Form möglich oder Übergänge zwischen Rechtecksformen mit verschiedenen Seitenverhältnissen. Das Beibehalten der gleichen Querschnittsfläche stellt sicher, dass pro Faser der gleiche Anteil von Pultrusionsmatrix 220 in dem Profil 300 ausgehärtet wird, so dass unabhängig von der Form des Querschnitts die gleichen mechanischen Eigenschaften aus der Mischung von Fasern und Matrix resultieren.

In der Fig. 1A wird jede Öffnungen 140 durch einander direkt benachbarte Schieber 145 gebildet, die sich senkrecht zur Bewegungsrichtung z verschieben lassen, z.B. mittels pneumatischer oder hydraulischer Antriebe. Die Schieber 145 können aber auch in anderer Weise verstellt werden, z.B. über eine mechanische Kulisse.

Die Schieber 145 können z.B. aus Metall bestehen. Der Zwischenraum zwischen den Schiebern 145 bildet dann einen zusammenhängenden Kanal, durch den das Faserbündel 210 geführt wird. Um dem Faserbündel 210 eine bestimmte Form zu geben, können sich die Positionen der einzelnen Schieber 145 beständig ändern. Insbesondere bei einer gekrümmten Form, wie sie in der Fig. 1A gezeigt ist, befinden sich sämtliche Schieber 145 ständig in Bewegung, um die Form des durch die Innenkonturen der Öffnungen 140 gebildeten Kanals ständig der gewünschten gekrümmten Form des Profils 300 anzupassen. Das Negativ der gewünschten Form des Profils 300 wandert also durch die Verstellung der Schieber 145 ständig mit der Bewegungsgeschwindigkeit des Faserbündels 210 durch das Formgebungswerkzeug 130. Ein bestimmter Abschnitt des Faserbündels 210, z.B. im gekennzeichneten Bereich A der Fig. 1A wird also stets von dem gleichen Konturverlauf umgeben, während er sich durchs Formgebungswerkzeug 130 bewegt.

Bei der Pultrusionsmatrix 220 kann es sich um ein ausreichend zähflüssiges Harz handeln, dass aufgrund der Tatsache, dass die einzelnen Öffnungen 140, bzw. die Schieber 145, durch die sie gebildet werden, direkt aneinander angrenzen, keine zusätzlichen Dichtungen zwischen den Öffnungen 140 vorhanden sein müssen, um die Pultrusionsmatrix 220 an den Fasern des Faserbündels 210 zu halten. Es kann aber auch sinnvoll sein, zwischen den Öffnungen 140 bzw. auch zwischen einzelnen Schiebern 145, die eine Öffnung 140 definieren, Abdichtungen 150 vorzusehen, die verhindern, dass Pultrusionsmatrix 220 verloren geht. Zudem können derartige Abdichtungen 150 dazu dienen, den durch die Öffnungen 140 laufenden Kanal für das Faserbündel 210 klarer zu definieren, oder dazu, Ränder des Profils 300 glatter zu gestalten.

In der Fig. 1A ist als Abdichtung 150 eine Membran gezeigt, die z.B. aus Metall ausgebildet sein kann. Alternativ kann die Membran aus jedem Material sein, dass widerstandsfähig und flexibel genug ist, sich der Formänderung der Öffnungen 140 anzupassen und die Pultrusionsmatrix 220 zu halten. Die Abdichtung 150 kann also z.B. aus einem dünnen Blech oder einer Metallfolie bestehen, die derart eingeschlagen ist, dass sie einen Schlauch bildet, der sich im Wesentlichen in die Bewegungsrichtung z erstreckt und einen Überlapp senkrecht zur Bewegungsrichtung z aufweist. Diese Wandung kann von der Rückseite her aktiv beheizbar sein, um eine dem im Werkzeug vorherrschenden hydraulischen Druck entgegenwirkende Kraft zu erzeugen. Der Überlapp ist hierbei nicht fixiert, so dass sich ein Bereich des Überlapps bei Änderungen der Querschnittsformen der Öffnungen 140 ändern kann, um eine vollständige Bedeckung der Öffnungen 140 durch die Abdichtung 150 zu gewährleisten. Auf diese Weise wird das in Pultrusionsmatrix 220 getränkte Faserbündel 210 sicher durch das Formgebungswerkzeug geführt, ohne dass es zu einem übermäßigen Verlust von Pultrusionsmatrix 220 kommt.

Anstatt der in der Fig. 1A gezeigten Abdichtung 150 können auch jede andere Art von Abdichtungen verwendet werden, die garantieren, dass die Pultrusionsmatrix 220 nicht zwischen den einzelnen Öffnungen 140 bzw. den sie bildenden Schiebern 145 entweichen kann. Zum Beispiel können Gummidichtungen zwischen einzelnen Schiebern 145 vorgesehen sein. Auch ist es möglich, in Längs- und/oder Querrichtung segmentierte Membranen vorzusehen, um die Flexibilität der Anordnung der Öffnungen 140 zu erhöhen.

Die in der Fig. 1A gezeigte Pultrusionsvorrichtung 100 eignet sich zur Herstellung von gekrümmten faserverstärkten Vollprofilen, d.h. von Profilen ohne innenliegenden Hohlraum. So kann die in der gezeigten Pultrusionsvorrichtung 100 hergestellte Serie von aufwärts und abwärts geschwungenen Bögen bei Abtrennung der einzelnen Bogensegmente durch eine Säge hinter dem Formgebungswerkzeug als Blattfedern verwendet werden, wie sie in der Automobilindustrie zum Einsatz kommen. Hier ist das Vorsehen eines Hohlraums nicht gewünscht.

Um Hohlräume im Profil 300 zu erzeugen, muss in an sich bekannter Weise von der Seite des Tränkwerkzeuges 120 her ein Kern (nicht gezeigt) in den Kanal für das Faserbündel 210 eingebracht werden. Der Kern bzw. seine Aufhängung laufen dann durch sämtliche Öffnungen. Die Möglichkeit, gekrümmte Profile 300 herstellen zu können, muss sich daher an der Form der Aufhängung und des Kerns orientieren. Für üblicherweise verwendete lineare Aufhängungen bzw. Kerne kann die Kontur des Profils 300 nur soweit von der linearen Form abweichen, dass die Öffnungen 140 die Aufhängung und den Kern enthalten können. Es ist aber auch möglich, gebogene Aufhängungen zu verwenden. Dann entspricht die Krümmung der herstellbaren Profile im Wesentlichen der Biegung der Aufhängung. Es ist daher mit der Pultrusionsvorrichtung der Fig. 1A auch möglich, gekrümmte Hohlprofile herzustellen.

Um das Aushärten der Pultrusionsmatrix 220 zu beschleunigen und damit die Länge des Formgebungswerkzeugs 130 bzw. die Anzahl von Schiebern 145 zu reduzieren, können die Öffnungen 140 in ihren Randbereichen mit Heizleitungen versehen sein, durch die ein Heizmedium strömen kann. Insbesondere können die Spitzen bzw. Enden der Schieber 145 mit solchen Heizleitungen versehen sein. Zudem kann auch ein etwaig vorhandener Kern derartige Heizleitungen aufweisen, um das Profil von innen zu heizen. Derartige Schieber bzw. Kerne können mittels additiver Fertigungsverfahren wie dem 3D-Druck aus Metall hergestellt werden, um maximal effiziente Heizleitungen herzustellen, die ansonsten nicht erzeugt werden könnten.

Die Pultrusionsvorrichtung 100 der Fig. 1A erlaubt es also, in effizienter Weise gekrümmte faserverstärkte Profile 300 herzustellen und/oder die Außenkontur von Profilen während des laufenden Betriebs zu verändern.

Eine Modifikation der Pultrusionsvorrichtung 100 der Fig. 1A ist in der Fig. 1B dargestellt. Die Pultrusionsvorrichtung 100 der Fig. 1B unterscheidet sich von der in der Fig. 1A dargestellten dadurch, dass die einzelnen Öffnung 140 nicht direkt aneinandergrenzend sondern voneinander beabstandet angeordnet sind. Dadurch kann die Komplexität des Formgebungswerkzeugs 130 verringert werden, da die Form bzw. Position von weniger Öffnungen 140 gesteuert werden muss.

Um ein Austreten der Pultrusionsmatrix 220 aus dem für das Faserbündel vorgesehenen Kanal zu verhindern und um eine glatte Außenkontur ohne Knicke für das Profil 300 zu schaffen, ist eine als Abdichtung 150 wirkende Membran wie sie oben beschrieben wurde an den Enden der die Öffnungen 140 formenden Schieber 145 angeordnet. Zu diesem Zweck können wie in der Fig. 1B gezeigt die Enden der Schieber 145 über Gelenke mit der Membran verbunden sein, z.B. durch mit der Membran verklebte Teller. Es ist aber auch jede andere Art der Verbindung denkbar, die eine Übertragung der Position auf die Position der Membran erlaubt. Zum Beispiel kann die Membran auch einfach auf den Schiebern 145 aufliegen. Die Bewegung aller Schieber 145, d.h. die Innenkonturen aller Öffnungen 140, definiert dann die Form der Membran, des darin liegenden Faserbündels 210 und damit des herzustellenden Profils 300.

Auch in der in der Fig. 1B gezeigten Variante wird die von den Schiebern 145 bzw. der Membran vorgegebene Kontur gleichlaufend mit der Geschwindigkeit des Faserbündels 210 in die Bewegungsrichtung z geschoben, so dass einzelne Bereiche des Faserbündels 210 stets von der gleichen Kontur umgeben sind.

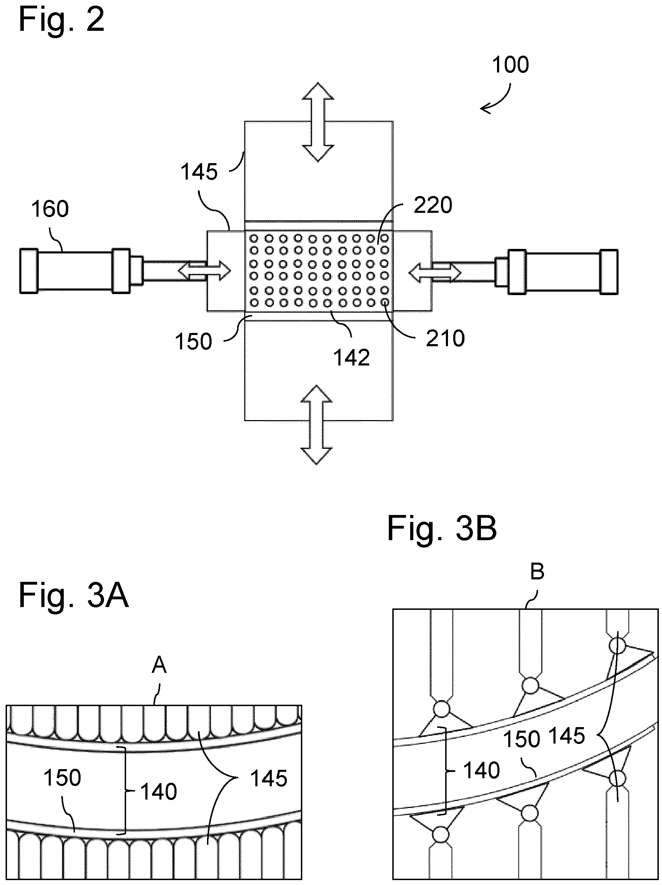

Die Fig. 2 zeigt einen Querschnitt durch eine Pultrusionsvorrichtungen 100 wie sie in den Fig. 1A oder 1B gezeigt ist. Der Querschnitt schneidet hierbei senkrecht zur Bewegungsrichtung z durch einen Satz der Schieber 145. Wie in der Fig. 2 gezeigt wird das in die Puitrusionsmatrix 220 eingebettete Faserbündel 210 von vier Seiten von Schiebern 145 umgeben. Die Innenkontur 142 der von den beiden senkrecht aufeinander stehenden Paaren von Schiebern 145 definierten Öffnung 140 bestimmt also die Außenkontur des aus ausgehärteter Pultrusionsmatrix 220 und darin eingebetteten Fasern bestehenden Profils 300.

Jeder der Schieber 145 ist unabhängig von den anderen Schiebern 145 beweglich und verstellbar, um die größtmögliche Flexibilität bei der Gestaltung des Querschnitts der Öffnung 140 zu erreichen. Die Bewegung erfolgt hierbei z.B. durch Mittel 160 zur hydraulischen oder pneumatischen Betätigung der Schieber. Es sind aber auch andere Aktuatoren denkbar, wie z.B. Elektromotoren oder mechanische Kulissen. Auf diese Weise kann zum Beispiel ein gleichbleibender Querschnitt nach oben oder zur Seite verschoben werden, z.B. um die Wanderung einer gekrümmten Kontur durch das Formgebungswerkzeug 130 zu erreichen. Die Innenkontur 142 bzw. der Querschnitt der Öffnung 140 können aber auch in ihrem Längen- zu Breitenverhältnis verändert werden. Bewegen sich die beiden seitlichen Schieber 145 nach innen, während die dazu senkrechten Schieber 145 nach oben bzw. unten bewegt werden, kann aus dem liegenden Rechtecksprofil ein quadratisches Profil oder ein stehendes Rechtecksprofil erzeugt werden. Um konstante Produkteigenschaften nach der Änderung der Querschnittsform zu gewährleisten, kann diese derart erfolgen, dass die Querschnittsfläche der Öffnung 140 vor und nach der Änderung gleich ist.

Um ein Austreten der Pultrusionsmatrix 220 aus dem Zwischenraum zwischen senkrecht zueinander stehenden Schiebern 145 zu verhindern, ist die (äußerst schematisch gezeigte) Abdichtung 150 vorhanden, die diesen Zwischenraum schließt. Dabei kann es sich wie oben erläutert um eine in sich gedrehte Membran handeln, deren Längsrichtung mit der Bewegungsrichtung z übereinstimmt. Insbesondere bei dicht aneinander angrenzenden Schiebern 145 benachbarter Öffnungen 140 kann auch jeder eine Öffnung definierende Satz Schieber 145 mit einer eigenen Abdichtung 150 versehen sein, wie z.B. verschiedenen an den Schiebern 145 befestigten Membranen oder Gummidichtungen, die flexibel zwischen die Schieber 145 eingepresst werden können.

Die in der Fig. 2 gezeigte Anordnung von Schiebern 145 muss hierbei jedoch als rein beispielhaft angesehen werden. So ist es z.B. auch möglich drei, fünf, sechs oder mehr Schieber zu verwenden, wenn die herzustellenden Profile entsprechende Grundformen aufweisen sollen. Durch die Verwendung einer in sich gedrehten Membran lassen sich aber z.B. auch ovale Konturen mit nur zwei Schiebern realisieren, die z.B. von oben und unten auf die Membran drücken. Ein Verrutschen zur Seite kann dabei durch entsprechende, unbewegliche Stopper verhindert werden.

Auch ist es möglich, anstelle der Schieber 145 Lochblenden zu verwenden. Hierbei besteht eine Öffnung 140 aus einem Loch in der Lochblende. Die Innenkontur der Öffnung 140 kann somit nicht verändert werden. Es ist aber möglich, die Lochblende senkrecht zur Bewegungsrichtung z zu verfahren, um z.B. gekrümmte Konturen herstellen zu können, wie es mit Bezug auf die Fig. 1A und 1B beschrieben wurde. Die Hintereinanderreihung der einzelnen Löcher in nichtlinearer Weise ergibt hierbei wieder die gekrümmte Kontur. Diese wird durch Verstellen der Position der Lochblenden gleichlaufend zum Faserbündel 210 durch das Formgebungswerkzeug bewegt. Auch dadurch können in einfacher Weise gekrümmte Profile 300 hergestellt werden. Durch das Vorsehen mehrerer Löcher mit verschiedenen Querschnitten in einer Lochblende kann bei unterbrochenem Betrieb auch hier die Außenkontur des hergestellten Profils verändert werden, indem das Faserbündel 210 durch verschiedene Löcher geführt wird.

Die Fig. 3A und 3B zeigen die mit A bzw. B markierten Bereiche der Fig. 1A und 1B im Detail. Hier sieht man, wie die Enden der Schieber direkt an der als Abdichtung 150 dienenden Membran anliegen können (Fig. 3A) bzw. wie sie über Gelenke oder Scharniere und an der Membran anhaftende Teller an der Membran befestigt sind (Fig. 3B). Die Membran gibt auf diese Weise die Innenkonturen der Öffnungen 140 an das mit der Pultrusionsmatrix 220 getränkte Faserbündel 210 weiter. In diesem Sinn definieren bei diesen Ausgestaltungen die Innenkonturen der Öffnungen 140 die Außenkontur des hergestellten Profils 300.

Mit der vorliegenden Erfindung wie sie in den Ansprüchen definiert ist und wie sie oben beispielhaft beschrieben wurde, ist es also möglich, eine Pultrusionsvorrichtung bereitzustellen, mit der ohne Unterbrechungen des Prozessablaufs faserverstärkte Profile hergestellt werden können, die veränderliche Querschnitte aufweisen oder gekrümmt sind. Der Pultrusionsprozess kann dabei kontinuierlich ablaufen und gewährleistet damit eine hohe Produktionsrate.

### Bezugszeichenliste

- 100: Pultrusionsvorrichtung
- 110: Faserzuführung
- 120: Tränkwerkzeug
- 130: Formgebungswerkzeug
- 140: Öffnung
- 142: Innenkontur einer Öffnung
- 145: Schieber
- 150: Abdichtungen
- 160: Mittel zum hydraulischen oder pneumatischen Betätigen der Schieber
- 210: Faserbündel
- 220: Pultrusionsmatrix
- 300: Faserverstärktes Profil

## Patentansprüche

1. Pultrusionsvorrichtung (100) zur Herstellung von faserverstärkten Profilen (300), umfassend
eine Faserzuführung (110) zum Zuführen eines Faserbündels (210);
ein Tränkwerkzeug (120) zum Tränken des von der Faserzuführung (110) zugeführten Faserbündels (210) in einer Pultrusionsmatrix (220); und
ein Formgebungswerkzeug (130) zum Formen und Aushärten des mit der Pultrusionsmatrix (220) getränkten Faserbündels (210), um ein faserverstärktes Profil (300) herzustellen; wobei
das Formgebungswerkzeug (130) geeignet ist, das mit der Pultrusionsmatrix (220) getränkte Faserbündel (210) in dem Formgebungswerkzeug (130) durch eine Mehrzahl von Öffnungen (140) zu bewegen, deren Innenkonturen (142) die Außenkontur des faserverstärkten Profils (300) definieren und die jeweils in Bewegungsrichtung des Faserbündels (210) feststehen;
wobei das Formgebungswerkzeug (130) geeignet ist, während eines Betriebs der Pultrusionsvorrichtung (100) Querschnitte der Öffnungen (140) senkrecht zur Bewegungsrichtung derart zu verändern, dass die Querschnittsflächen der Öffnungen (140) konstant bleiben; und
das Formgebungswerkzeug (130) Abdichtungen (150) aufweist, die innerhalb der Öffnungen (140) angeordnet sind und einen durch sämtliche Öffnungen (140) führenden Kanal für das mit der Pultrusionsmatrix (220) getränkte Faserbündel (210) bilden, wobei
die Abdichtungen (150) als eine Membran aus einem Werkstoff, vorzugsweise einem Metall, ausgebildet sind, **dadurch gekennzeichnet, dass** die Membran mit einem Überlapp senkrecht zur Bewegungsrichtung in sich gedreht ist.

2. Pultrusionsvorrichtung (100) nach Anspruch 1, wobei
das Formgebungswerkzeug (130) geeignet ist, die Querschnitte der Öffnungen (140) derart zu verändern, dass die Innenkonturen (142) der Öffnungen eine für die Außenkontur des faserverstärkten Profils (300) gewünschte Krümmung definieren; und
das Formgebungswerkzeug (130) geeignet ist, die Querschnitte der Öffnungen (140) derart zu verändern, dass die Krümmung beim Bewegen des Faserbündels (210) durch die Öffnungen (140) erhalten bleibt.

3. Pultrusionsvorrichtung (100) nach einem der vorherigen Ansprüche, wobei
das Formgebungswerkzeug (130) für jede Öffnung (140) eine Kombination von verstellbaren Schiebern (145) aufweist, deren Positionen den Querschnitt der jeweiligen Öffnung (140) definieren.

4. Pultrusionsvorrichtung (100) nach Anspruch 3, wobei
jede Öffnung (140) von zwei Paaren von Schiebern (145) definiert wird; und
das eine Paar von Schiebern (145) geeignet ist, in einer ersten Richtung verstellt zu werden, die senkrecht zur Bewegungsrichtung ist, und das andere Paar von Schiebern (145) geeignet ist, in einer zweiten Richtung verstellt zu werden, die senkrecht zur ersten Richtung und zur Bewegungsrichtung ist.

5. Pultrusionsvorrichtung (100) nach einem der Ansprüche 3 oder 4, wobei
das Formgebungswerkzeug (130) Mittel (160) zum hydraulischen oder pneumatischen Betätigen der Schieber (145) aufweist oder die Schieber (145) mechanisch über eine Kulisse verfahren werden können.

6. Pultrusionsvorrichtung (100) nach einem der Ansprüche 4 bis 5, wobei
die Schieber (145) benachbarter Öffnungen (140) aneinander angrenzen; oder
die Schieber (145) benachbarter Öffnungen (140) voneinander beabstandet sind.

7. Pultrusionsvorrichtung (100) nach einem der vorherigen Ansprüche, des Weiteren aufweisend
einen Kern, der sich vom Tränkwerkzeug (110) aus durch Öffnungen (140) des Formgebungswerkzeugs (130) erstreckt, um einen Hohlraum im faserverstärkten Profil (300) zu erzeugen.

8. Pultrusionsvorrichtung (100) nach einem der Ansprüche 3 bis 7, wobei
zumindest ein Teil der Schieber (145) und/oder der Kern Kanäle aufweisen, die geeignet sind, ein Heizmedium zu führen.

## Claims

1. A pultrusion device (100) for producing fibre-reinforced profiles (300), comprising
a fibre feed (110) for feeding a fibre bundle (210); an impregnating tool (120) for impregnating the fibre bundle (210) fed by the fibre feed (110) in a pultrusion matrix (220); and
a shaping tool (130) for forming and curing the fibre bundle (210) impregnated with the pultrusion matrix (220), in order to produce a fibre-reinforced profile (300); wherein
the shaping tool (130) is suitable for moving, in the shaping tool (130), the fibre bundle (210) impregnated with the pultrusion matrix (220) through a plurality of openings (140), the inner contours (142) of which define the outer contour of the fibre-reinforced profile (300) and which are each fixed in the direction of movement of the fibre bundle (210);
wherein the shaping tool (130) is suitable for changing, during an operation of the pultrusion device (100), cross-sections of the openings (140) perpendicular to the direction of movement in such a way that the cross-sectional areas of the openings (140) remain constant; and
the shaping tool (130) has seals (150) which are arranged within the openings (140) and form a channel for the fibre bundle (210) impregnated with the pultrusion matrix (220) leading through all the openings (140),
wherein the seals (150) are formed as a membrane from a material, preferably a metal, **characterized in that** the membrane is turned in on itself with an overlap perpendicular to the direction of movement.

2. The pultrusion device (100) according to Claim 1, wherein
the shaping tool (130) is suitable for changing the cross-sections of the openings (140) in such a way that the inner contours (142) of the openings define a desired curvature for the outer contour of the fibre-reinforced profile (300); and
the shaping tool (130) is suitable for changing the cross-sections of the openings (140) in such a way that the curvature is maintained on moving of the fibre bundle (210) through the openings (140).

3. The pultrusion device (100) according to one of the preceding claims, wherein
the shaping tool (130) for each opening (140) has a combination of adjustable sliders (145), the positions of which define the cross-section of the respective opening (140).

4. The pultrusion device (100) according to Claim 3, wherein
each opening (140) is defined by two pairs of sliders (145); and
the one pair of sliders (145) is suitable for being adjusted in a first direction which is perpendicular to the direction of movement, and the other pair of sliders (145) is suitable for being adjusted in a second direction which is perpendicular to the first direction and to the direction of movement.

5. The pultrusion device (100) according to one of Claims 3 or 4, wherein
the shaping tool (130) has means (160) for the hydraulic or pneumatic actuating of the sliders (145), or the sliders (145) can be moved mechanically via a connecting link.

6. The pultrusion device (100) according to one of Claims 4 to 5, wherein
the sliders (145) of adjacent openings (140) adjoin one another; or
the sliders (145) of adjacent openings (140) are spaced apart from one another.

7. The pultrusion device (100) according to one of the preceding claims, furthermore having
a core, which extends out from the impregnating tool (110) through openings (140) of the shaping tool (130), in order to produce a cavity in the fibre-reinforced profile (300).

8. The pultrusion device (100) according to one of Claims 3 to 7, wherein
at least some of the sliders (145) and/or the core have channels which are suitable for directing a heating medium.

## Revendications

1. Dispositif de pultrusion (100), destiné à produire des profilés (300) renforcés par fibres, comprenant
une alimentation (110) des fibres, destinée à alimenter un faisceau (210) de fibres;
un outil d'imprégnation (120), destiné à imprégner le faisceau (210) de fibres alimenté par l'alimentation (110) des fibres dans une matrice (220) de pultrusion ; et
un outil de façonnage (130), destiné à façonner et à solidifier le faisceau (210) de fibres imprégné par la matrice (220) de pultrusion, pour produire un profilé (300) renforcé par fibres ;
l'outil de façonnage (130) étant apte à déplacer le faisceau (210) de fibres imprégné par la matrice (220) de pultrusion dans l'outil de façonnage (130) à travers une pluralité d'orifices (140), dont les contours internes (142) définissent le contour externe du profilé (300) renforcé par fibres et qui sont respectivement stationnaires dans la direction de déplacement du faisceau (210) de fibres ;
l'outil de façonnage (130) étant apte, pendant un fonctionnement du dispositif de pultrusion (100) à faire varier des sections transversales des orifices (140) à la perpendiculaire de la direction de déplacement, de telle sorte que les surfaces de section transversale des orifices (140) restent constantes ; et
l'outil de façonnage (130) comportant des joints (150), qui sont placés à l'intérieur des orifices (140) et qui forment une canalisation menant à travers l'ensemble des orifices (140) pour le faisceau (210) de fibres imprégné par la matrice (220) de pultrusion,
les joints (150) étant constitués sous la forme d'une membrane en une matière, de préférence en un métal, **caractérisé en ce que** la membrane est tournée sur soi avec un chevauchement à la perpendiculaire de la direction de déplacement.

2. Dispositif de pultrusion (100) selon la revendication 1,
l'outil de façonnage (130) étant apte à faire varier les sections transversales des orifices (140) de telle sorte, que les contours internes (142) des orifices définissent une courbure souhaitée pour le contour externe du profilé (300) renforcé par fibres ; et
l'outil de façonnage (130) étant apte à faire varier les sections transversales des orifices (140) de telle sorte, que la courbure reste maintenue lors du déplacement du faisceau (210) de fibres à travers les orifices (140).

3. Dispositif de pultrusion (100) selon l'une quelconque des revendications précédentes,
l'outil de façonnage (130) comportant pour chaque orifice (140) une association de coulisseaux (145) ajustables, dont les positions définissent la section transversale de l'orifice (140) concerné.

4. Dispositif de pultrusion (100) selon la revendication 3,
chaque orifice (140) étant défini par deux paires de coulisseaux (145) ; et
l'une paire de coulisseaux (145) étant apte à être ajustée dans une première direction, qui est perpendiculaire à la direction de déplacement, et l'autre paire de coulisseaux (145) étant apte à être ajustée dans une deuxième direction, qui est perpendiculaire à la première direction et à la direction de déplacement.

5. Dispositif de pultrusion (100) selon l'une quelconque des revendications 3 ou 4,
l'outil de façonnage (130) comportant des moyens (160) destinés à l'actionnement hydraulique ou pneumatique du coulisseau (145) ou les coulisseaux (145) étant susceptibles d'être déplacés mécaniquement par l'intermédiaire d'une coulisse.

6. Dispositif de pultrusion (100) selon l'une quelconque des revendications 4 à 5,
les coulisseaux (145) d'orifices (140) voisins étant mutuellement adjacents ; ou
les coulisseaux (145) d'orifices (140) voisins étant écartés les uns des autres.

7. Dispositif de pultrusion (100) selon l'une quelconque des revendications précédentes, comportant par ailleurs :
un noyau, qui s'étend à partir de l'outil d'imprégnation (110) à travers des orifices (140) de l'outil de façonnage (130), pour créer une cavité dans le profilé (300) renforcé par fibres.

8. Dispositif de pultrusion (100) selon l'une quelconque des revendications 3 à 7,
au moins une partie des coulisseaux (145) et / ou le noyau comportant des canalisations qui sont aptes à conduire un fluide chauffant.
